# EUROPÄISCHE PATENTSCHRIFT

(11) **EP 1 063 147 B1**
(45) Veröffentlichungstag und Bekanntmachung des Hinweises auf die Patenterteilung: **02.05.2003**
(21) Anmeldenummer: 00113059.0
(22) Anmeldetag: 23.06.2000
(51) Int. Cl.: B62D 1/06

(54) **Fahrzeuglenkrad**
Vehicle steering wheel
Volant de véhicule

(30) Priorität: 23.06.1999 DE 29910992 U
(43) Veröffentlichungstag der Anmeldung: 27.12.2000
(73) Patentinhaber: TRW Automotive Safety Systems GmbH, 63743 Aschaffenburg (DE)
(72) Erfinder: Schuler, Patrik, 63785 Obernburg (DE)
(74) Vertreter: Kitzhofer, Thomas, Dipl.-Ing.

(56) Entgegenhaltungen:
- US-A- 3 576 139

## Beschreibung

Die Erfindung betrifft ein Fahrzeuglenkrad gemäß Oberbegriff des Anspruchs 1, mit einer Lenkradnabe, einem Lenkradkranz mit Umschäumung und einem von außen sichtbaren Einsatz auf der der Lenkradnabe zugewandten Innenseite oder der ihr abgewandten Außenseite des Lenkradkranzes, wie es aus US-A-3 576 139 bekannt ist.

Lenkräder mit von außen sichtbaren Einsätzen, die zunehmend ein Holzimitat haben, sollen dem Lenkrad ein edleres Aussehen geben und werden zunehmend häufiger vom Kunden gewünscht. Diese Lenkräder sind fast immer beledert. Die Einsätze sind aber üblicherweise nur über bestimmte Segmentabschnitte von außen sichtbar. Gerade im Übergangsbereich zwischen den Lenkradspeichen und dem Lenkradkranz sind keine Einsätze vorgesehen. Bislang werden mehrere Einsätze an der Innenoder Außenseite des Lenkradkranzes befestigt, welche Segmentabschnitte dieser umlaufenden Innen- oder Außenseite bilden. Die Befestigung dieser Einsätze am Lenkradkranz oder in der Umschäumung sind aufwendig und machen das Lenkrad teuer.

Die Erfindung schafft ein Fahrzeuglenkrad, bei dem ein derartiger Einsatz wesentlich besser im Lenkradkranz befestigt und dessen Montage leichter und billiger ist. Dies wird bei einem Fahrzeuglenkrad der eingangs genannten Art dadurch erreicht, daß der Einsatz ein umlaufender Ring ist, der auf dem Umfang des Lenkradkranzes erste Segmentabschnitte hat, die von außen sichtbar sind, und sich damit abwechselnde, von außen nicht sichtbare, in der Umschäumung eingebettete zweite Segmentabschnitte. Während bei den bisherigen Lenkrädern mehrere Einsätze vorgesehen waren und jeder Einsatz nur einen von außen sichtbaren Segmentabschnitt bildete, ist beim Fahrzeuglenkrad nach der Erfindung der Einsatz ein umlaufender Ring, der alle sichtbaren Segmentabschnitte aufweist. Die sichtbaren Segmentabschnitte werden durch nicht von außen sichtbare, in der Umschäumung eingebettete Segmentabschnitte miteinander verbunden, so daß sich ein umlaufender, vorzugsweise geschlossener Ring ergibt. Die Befestigung im Lenkradkranz samt Umschäumung ist wesentlich einfacher, da die Segmentabschnitte sich gegenseitig halten. Zudem sind auch weniger Einzelteile notwendig.

Die zweiten Segmentabschnitte sind gemäß der bevorzugten Ausführungsform gegenüber den ersten, sichtbaren Segmentabschnitten radial oder axial versetzt, z.B. indem sie als axial zur Vorderseite des Lenkrads gekrümmte Bögen ausgebildet sind.

Da der Einsatz erst nach der Umschäumung am Fahrzeuglenkrad befestigt wird, kann die Umschäumung wenigstens teilweise zur Halterung des Einsatzes dienen. Die einfache Montage und Arretierung des Einsatzes ist nach der bevorzugten Ausführungsform dadurch möglich, daß die Umschäumung der Form des Einsatzes angepaßte Ausnehmungen hat. Diese erlauben ein Einschieben des Einsatzes in diese Ausnehmungen in Achsrichtung der Nabe und damit in die Umschäumung. Die zweiten Segmente werden in die taschenähnlichen Ausnehmungen einfach eingeschoben, und der Einsatz sitzt fest am Lenkradkranz. Natürlich können zusätzliche Einrichtungen vorgesehen sein, um den Einsatz auch am Lenkradskelett, hier vorzugsweise am Lenkradkranz zu befestigen. Beispielsweise kann hierzu eine Rastverbindung vorgesehen sein, die durch die Umschäumung selbst gebildet ist, indem die Umschäumung z.B. einen Vorsprung aufweist, der den Einsatz in der Ausnehmung hält.

Damit das Einschieben in diese Taschen und das Umschäumen einfach erfolgen kann, haben die zweiten Segmentabschnitte vorzugsweise ein im Querschnitt in Achsrichtung langgestrecktes Profil. Die Außen- und die Innenseite des zweiten Segmentsabschnitts sind bei dieser Ausführungsform im wesentlichen zylindrisch, damit ein axiales Einschieben erleichtert wird. Starke Hinterschneidungen oder dergleichen sollen in den zweiten Segmentabschnitten und in der Umschäumung in dem Bereich der Taschen vermieden werden, denn dies würde den jeweiligen Herstellungsprozeß kompliziert gestalten.

Das erfindungsgemäße Lenkrad ist vorzugsweise beledert, wobei durch die Belederung die zweiten Segmentabschnitte von außen nicht sichtbar sind. Nach dem Einführen des Einsatzes in die taschenartigen Ausnehmungen in der Umschäumung wird der Lenkradkranz umfangsmäßig im Bereich der nicht sichtbaren, zweiten Segmentabschnitte durch die Belederung geschlossen.

Die zweiten Segmentabschnitte sind vorzugsweise im Bereich des Übergangs der Speichen zu dem Lenkradkranz vorgesehen.

Weitere Merkmale und Vorteile der Erfindung ergeben sich aus der nachfolgenden Beschreibung und aus der nachfolgenden Zeichnungen, auf die Bezug genommen wird. In den Zeichnungen zeigen:
Figur 1 eine Draufsicht auf ein schematisch dargestelltes Fahrzeuglenkrad nach der Erfindung,
Figur 2a eine perspektivische Ansicht auf den beim Fahrzeuglenkrad nach Figur 1 verwendeten Einsatz, der auf das Lenkradskelett, das beim Lenkrad nach Figur 1 verwendet wird, gelegt ist,
Figur 2b eine Ansicht in Richtung des Pfeiles X in Figur 2 auf einen Abschnitt von Y nach Z der Innenseite des umschäumten Lenkradkranzes,
Figur 3 einen Querschnitt durch den Lenkradkranz nach der Linie III-III in Figur 1,
Figur 4 einen Querschnitt durch den Lenkradkranz vor einer Speiche nach der Linie IV-IV nach Figur 1,
Figur 5 einen Querschnitt durch den Lenkradkranz im Bereich des Übergangs zu einer Lenkradspeiche gemäß der Linie V-V in Figur 1, und
Figur 6 einen Querschnitt durch einen Lenkradkranz gemäß einer anderen Ausführungsform vor einer Speiche.

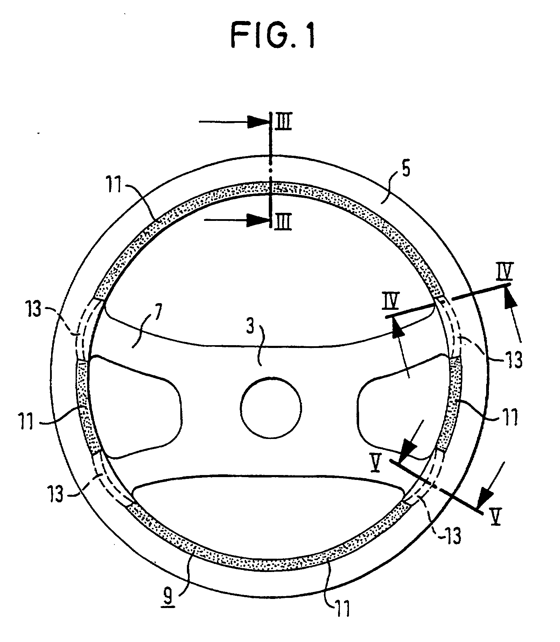

In Figur 1 ist ein Fahrzeuglenkrad dargestellt, das eine Lenkradnabe 3, einen Lenkradkranz 5 mit Umschäumung sowie Speichen 7 aufweist, die die Lenkradnabe 3 mit dem Lenkradkranz 5 verbinden. Das Fahrzeuglenkrad hat ein sehr hochwertiges Aussehen, was insbesondere durch seine Belederung und einen Einsatz 9 erreicht wird, der über mehrere Kreissegmente auf der der Lenkradnabe 3 zugewandten Innenseite des Lenkradkranzes 5 von außen sichtbar ist. Der Einsatz 9 ist ein in Umfangsrichtung geschlossener Kunststoffring oder ein Ring aus anderem geeigneten Material wie Aluminium, Holz oder Verbundwerkstoff, der auf seiner sichtbaren Innenseite ein Holzimitat aufweisen kann. Der Einsatz 9 hat erste Segmentabschnitte 11, die von außen sichtbar sind und die Innenseite des Lenkradkranzes definieren, sowie zweite Segmentabschnitte 13, welche von außen nicht sichtbar sind und welche benachbarte erste Segmentabschnitte 11 miteinander verbinden. Diese zweiten Segmentabschnitte, die im Übergang zwischen den Lenkradspeichen 7 und dem Lenkradkranz 5 liegen, sind im Querschnitt wesentlich schmäler und von der Umschäumung umgeben. Da der Lenkradkranz 5 normalerweise auf seinem Umfang stets den gleichen Querschnitt aufweisen soll, muß der Einsatz 9 im Bereich der zweiten Segmentabschnitte 13 in die Umschäumung hineinverlaufen. Dies kann z.B. dadurch erfolgen, daß die zweiten Segmentabschnitte 13 in Achsrichtung der Lenkradnabe 3 ober- oder unterhalb der durch die ersten Segmentabschnitte 11 definierten Ebene verlaufen. Die zweiten Segmentabschnitte können sich gegenüber den ersten auch radial weiter nach außen und damit in die Umschäumung erstrecken.

Vorzugsweise ist der Übergang zwischen den ersten und zweiten Segmentabschnitten 11, 13 bogenförmig ausgebildet, so daß sich absatzlose Übergangskonturen ergeben. Mit 21 ist der den komplett umschäumten und belederten Lenkradkranz 5 bildende Teil des Lenkradskeletts bezeichnet. Liegt der Einsatz 9 in axialer Richtung oberhalb des Skeletts, d.h. über dem Teil 21 des Lenkradkranzes 5, so ist ein bogenförmiger Übergang zwischen den Segmentabschnitten 11, 13 nicht erforderlich.

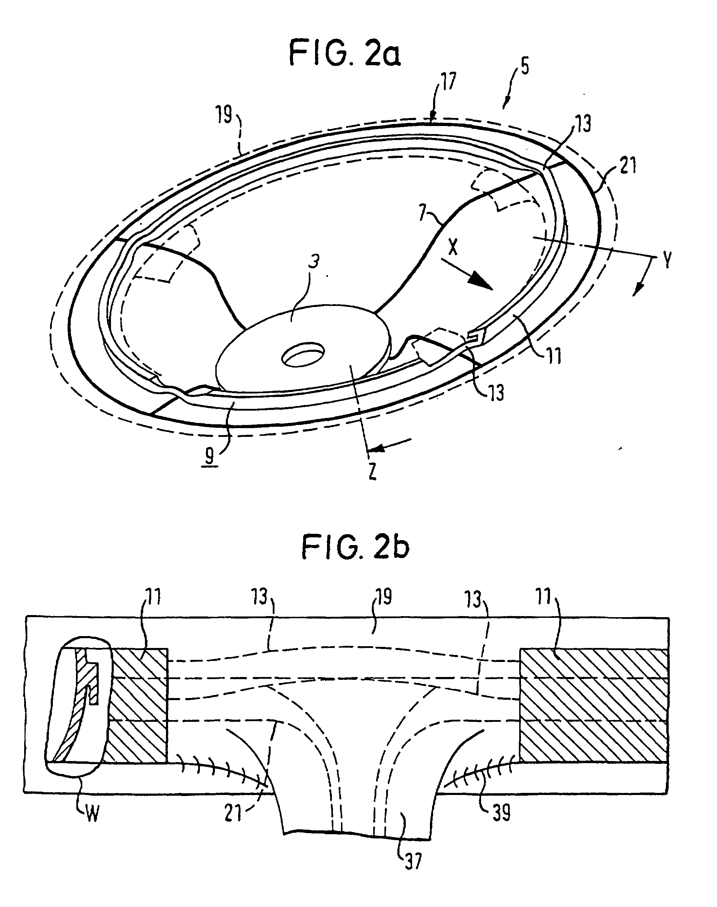

In Figur 2a ist der Einsatz 9 besser zu erkennen, und es ist auch das Lenkradskelett 17, bestehend aus dem Teil 21 des Lenkradkranzes 5 und Speichen 7, dargestellt, so daß die Geometrie von Lenkradskelett 17 zu Einsatz 9 klarer wird. Figur 2a veranschaulicht, daß die zweiten Segmentabschnitte 13 bogenförmig nach oben in Achsrichtung verlaufen und damit oberhalb der Speichen 7, genauer gesagt des Skelettabschnitts in den Speichen 7 liegen. Mit unterbrochenen Linien ist die spätere Umschäumung 19 angedeutet.

In Figur 2b ist der Übergang zwischen den Segmentabschnitten 11 und 13 auf der Innenseite des Lenkradkranzes nach dem Umschäumen und Beledern zu sehen. Die Segmente 11, die zur besseren Unterscheidbarkeit schraffiert dargestellt sind, sind von außen zur Speiche 7 hin abrupt nicht mehr sichtbar und werden durch ein Segment 13, von dem der obere Rand und der untere Rand jeweils mit dem Bezugszeichen 13 versehen sind, miteinander verbunden. Der den Lenkradkranz bildende Teil 21 des Lenkradskeletts läuft unterhalb des Segments 13. Mit 37 ist der geschäumte Ansatz einer Lenkradspeiche bezeichnet, der zur besseren Darstellung teilweise abgeschnitten dargestellt ist. 39 bezeichnet die Naht der Belederung. In dem umkreisten Bereich W ist das Segment 13 geschnitten und um 90° gedreht dargestellt.

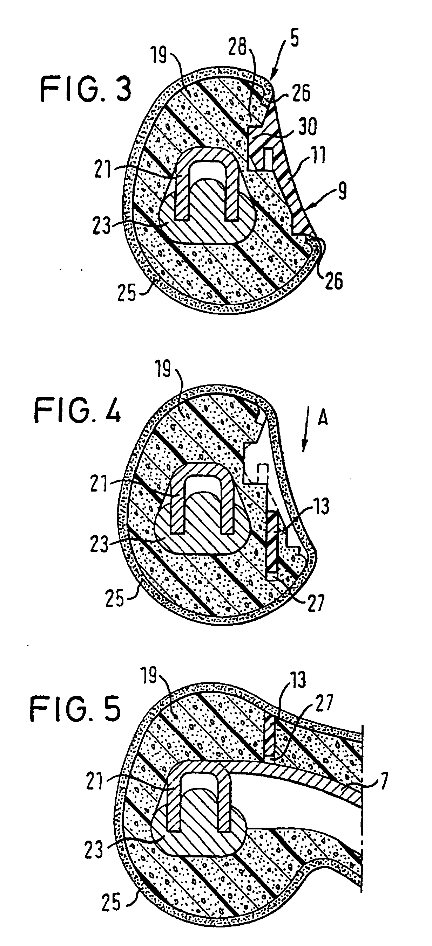

Die Figuren 3 bis 5 zeigen auch explizit die Umschäumung 19 des Lenkradkranzes, die auch vollständig oder teilweise die Speichen 7 umgibt und gegebenenfalls die Lenkradnabe 3 umgeben kann. An der Rückoder Unterseite des Lenkradkranzes 21 ist eine Zusatzmasse 23 mit dem Lenkradkranz 21 verbunden, die die träge Masse des Lenkradkranzes erhöhen soll. In Figur 3 ist im Querschnitt der erste Segmentabschnitt 11, der auf der Innenseite des umschäumten Lenkradkranzes 5 sichtbar ist, gezeigt. Eine Belederung 25 erstreckt sich umfangsmäßig bis zu dem Einsatz 9 und verläuft mit ihren freien Rändern 26 im Bereich des Übergangs zu dem Einsatz 9 radial einwärts.

Die Figur 4 zeigt den Übergang eines ersten Segmentabschnitts 11 zu einem zweiten Segmentabschnitt 13 unmittelbar vor einer Speiche 7. Da der Einsatz 9 beim Umschäumen des Lenkradskelettes 17 nicht mit umschäumt wird, muß die Umschäumung 19 bereits entsprechende Ausnehmungen für den Einsatz 9 haben, so daß der Einsatz 9 nur in diese Ausnehmungen eingeschoben wird. Der zweite Segmentabschnitt 13 ist in eine entsprechende taschenförmige Ausnehmung 27 in der Umschäumung 19 in Achsrichtung A eingesetzt und in der Umschäumung 19 praktisch eingebettet. Die Umschäumung 19 hat einen Vorsprung 28, der eine Rastverbindung für den Einsatz 9 darstellt, denn er bildet eine Hinterschneidung in Achsrichtung A und greift nach dem Einschieben des Einsatzes an diesem an und ist bestrebt, den Einsatz 9 in Achsrichtung A zu drücken, wodurch sich ein guter Sitz in axialer Richtung ergibt. Der Einsatz hat zu diesem Zweck ebenfalls einen Vorsprung 30, an dem der Vorsprung 28 der Umschäumung 19 unmittelbar angreift. Die Belederung 25 ist umfangsmäßig geschlossen und sorgt dafür, daß der zweite Segmentabschnitt 13 von außen nicht sichtbar ist.

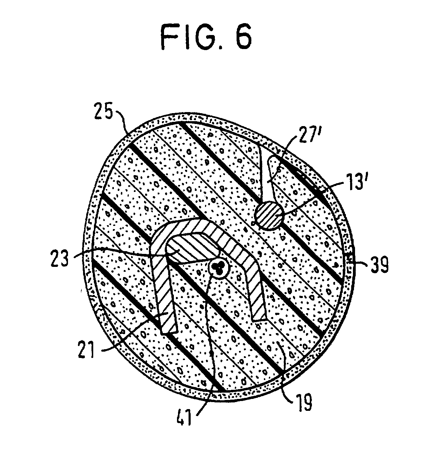

Figur 5 verdeutlicht, daß der zweite Segmentabschnitt 13 im Bereich der Speiche 7 des Lenkradskelettes oberhalb dieser verläuft. Die bereits in Figur 4 gezeigte Ausnehmung 27 in der Umschäumung 19 verläuft entsprechend oberhalb der Speiche 7 des Lenkradskelettes.

Auch hier deckt die Belederung 25 den zweiten Segmentabschnitt 13 ab.

Im folgenden wird die Herstellung des erfindungsgemäßen Lenkrades kurz erläutert. Nach der Herstellung des Lenkradskelettes 17 werden Zusatzmassen 23 am Lenkradkranz 21 des Skelettes 17 befestigt. Anschließend wird das Lenkradskelett 17 umschäumt, wobei die Form so ausgebildet ist, daß die bereits erläuterten Ausnehmungen 27 entstehen. Nun wird das Lenkrad beledert. Die Ränder 26, die den späteren Übergang des Leders zu den ersten Segmentabschnitten 11 bilden, werden dabei verklebt. Anschließend wird der Einsatz 9 von der Vorderseite des Lenkrads in Achsrichtung A in die Ausnehmungen 27 eingeschoben, wobei anstelle von oder zusätzlich zur Rastverbindung, die durch den Vorsprung 28 der Umschäumung 19 und den Vorsprung 30 des Einsatzes gebildet ist, eine nicht gezeigte Clip-Verbindung zwischen dem Lenkradskelett und dem Einsatz 9 zur zusätzlichen Fixierung des Einsatzes 9 dienen kann. Diese Clip-Verbindung kann eine Verbindung zwischen dem Lenkradkranz 21 des Lenkradskeletts oder den Lenkradspeichen 29 des Skeletts mit dem Einsatz 7 sein. Schließlich wird das Leder im Bereich der zweiten Segmente 13 befestigt, z.B. durch Kleben und Vernähen, so daß der Einsatz im Bereich der zweiten Segmentabschnitte 13 von außen nicht sichtbar ist. Die Ränder 26 des Leders können auch zwischen der Umschäumung 19 und dem Einsatz 9 geklemmt werden.

Um das Einschieben des Einsatzes 9 in die Umschäumung 19 zu erleichtern, haben die zweiten Segmentabschnitte 13 im Querschnitt ein in Achsrichtung A langgestrecktes Profil, mit einer im wesentlichen zylindrischen Außenseite und einer im wesentlichen zylindrischen Innenseite. Damit sollen Hinterschneidungen sowohl am Einsatz 9 als auch in der Umschäumung 19 vermieden werden, die deren Herstellung erschweren oder unmöglich machen würden.

Die in Figur 6 dargestellte, modifizierte Ausführungsform zeigt einen Querschnitt durch einen Lenkradkranz im Bereich vor einer Speiche, also in dem Bereich, der auch in Figur 4 dargestellt ist. Bei dieser Ausführungsform sind die Segmente 13, die hier mit 13' bezeichnet sind, nicht langgestreckt, sondern oval bis kreisförmig im Querschnitt. Die Ausnehmung 27' in der Umschäumung 19 ist hier ebenfalls taschenförmig, wobei die Ausnehmung 27' nach unten breiter wird, so daß sich auch hier eine Rastverbindung zwischen der Umschäumung 19 und dem Segment 13' ergibt. Innerhalb des Lenkradkranzes 21, also des Skelettabschnitts des Lenkradkranzes, ist ein Schalterkabel 41 nahe der Zusatzmasse 23 in die Umschäumung 19 eingebettet.

## Patentansprüche

1. Fahrzeuglenkrad, mit
einer Lenkradnabe (3),
einem Lenkradkranz (5) mit Umschäumung (19) und
einem von außen sichtbaren Einsatz (11) auf der der Lenkradnabe (3) zugewandten Innenseite oder der ihr abgewandten Außenseite des Lenkradkranzes (5),
**dadurch gekennzeichnet,**
**daß** der Einsatz (9) ein umlaufender Ring ist, der auf dem Umfang des Lenkradkranzes (5) erste Segmentabschnitte (11), die von außen sichtbar sind, und sich damit abwechselnde, von außen nicht sichtbare, in der Umschäumung (19) eingebettete zweite Segmentabschnitte (13) hat.

2. Fahrzeuglenkrad nach Anspruch 1, **dadurch gekennzeichnet, daß** die zweiten Segmentabschnitte (13) gegenüber den ersten Segmentabschnitten radial oder axial versetzt sind.

3. Fahrzeuglenkrad nach Anspruch 2, **dadurch gekennzeichnet, daß** die zweiten Segmentabschnitte (13) bogenförmig gekrümmt verlaufen.

4. Fahrzeuglenkrad nach einem der vorhergehenden Ansprüche, **dadurch gekennzeichnet, daß** die Umschäumung (19) der Form des Einsatzes (9) so angepaßte Ausnehmungen (27) hat, daß der Einsatz (9) in Achsrichtung (A) der Nabe (3) in die Ausnehmungen (27) eingeschoben werden kann.

5. Fahrzeuglenkrad nach Anspruch 4, **dadurch gekennzeichnet, daß** die Umschäumung (19) einen Vorsprung (28) hat, der eine Rastverbindung mit dem in die Ausnehmung (27) in der Umschäumung (19) eingeschobenen Einsatz (9) bildet.

6. Fahrzeuglenkrad nach einem der vorhergehenden Ansprüche, **dadurch gekennzeichnet, daß** die zweiten Segmentabschnitte (13) ein im Querschnitt in Achsrichtung langgestrecktes Profil haben, mit einer im wesentlichen zylindrischen Außen- und einer im wesentlichen zylindrischen Innenseite.

7. Fahrzeuglenkrad nach einem der vorhergehenden Ansprüche, **dadurch gekennzeichnet, daß** wenigstens der Lenkradkranz beledert ist und die zweiten Segmentabschnitte (13) durch die Belederung (25) des Lenkradkranzes (5) von außen nicht sichtbar sind.

8. Fahrzeuglenkrad nach einem der vorhergehenden Ansprüche, **dadurch gekennzeichnet, daß** die zweiten Segmentabschnitte (3) im Bereich des Übergangs der Speichen (7) zum Lenkradkranz (5) vorgesehen sind.

## Claims

1. A vehicle steering wheel, comprising
a steering wheel hub (3),
a steering wheel rim (5) with foam casing (19), and
an insert (9), visible from the outside, on the inner face facing the steering wheel hub (3) or on the outer face, facing away therefrom, of the steering wheel rim (5),
**characterized in that**
the insert (9) is a continuous ring which has first segment sections (11) on the periphery of the steering wheel rim (5), which are visible from the outside, and second segment sections (13) alternating therewith, which are not visible from the outside and are embedded in the foam casing (19).

2. The vehicle steering wheel according to Claim 1, **characterized in that** the second segment sections (13) are offset radially or axially with respect to the first segment sections.

3. The vehicle steering wheel according to Claim 2, **characterized in that** the second segment sections (13) run curved in an arc shape.

4. The vehicle steering wheel according to any of the preceding claims, **characterized in that** the foam casing (19) has recesses (27) which are adapted to the shape of the insert (9) such that the insert (9) can be pushed into the recesses (27) in the axial direction (A) of the hub (3).

5. The vehicle steering wheel according to Claim 4, **characterized in that** the foam casing (19) has a projection (28) which forms a detent connection with the insert (9) pushed into the recess (27) in the foam casing (19).

6. The vehicle steering wheel according to any of the preceding claims, **characterized in that** the second segment sections (13) have a profile which is elongated in cross-section in the axial direction, with a substantially cylindrical outer face and a substantially cylindrical inner face.

7. The vehicle steering wheel according to any of the preceding claims, **characterized in that** at least the steering wheel rim is covered with leather and the second segment sections (13) are not visible from the outside owing to the leather covering (25) of the steering wheel rim (5).

8. The vehicle steering wheel according to any of the preceding claims, **characterized in that** the second segment sections (13) are provided in the region of the transition of the spokes (7) to the steering wheel rim (5).

## Revendications

1. Volant de véhicule, comportant
un moyeu de volant (3),
une couronne de volant (5) avec revêtement en mousse (19) et
un insert (9) visible de l'extérieur sur la face intérieure tournée vers le moyeu de volant (5) ou sur la face extérieure détournée de celui-ci, de la couronne de volant (5),
**caractérisé en ce que** l'insert (9) est un anneau circonférentiel qui a des premiers tronçons de segments (11) qui sont visibles de l'extérieur et des deuxièmes tronçons de segments (13) alternant avec ceux-ci, encastrés dans le revêtement en mousse (19) et qui ne sont pas visibles de l'extérieur.

2. Volant de véhicule selon la revendication 1, **caractérisé en ce que** les deuxièmes tronçons de segments (13) sont décalés radialement ou axialement par rapport aux premiers tronçons de segments.

3. Volant de véhicule selon la revendication 2, **caractérisé en ce que** les deuxièmes tronçons de segments (13) s'étendent recourbés en forme d'arc.

4. Volant de véhicule selon l'une des revendications précédentes, **caractérisé en ce que** le revêtement en mousse (19) a des évidements (27) adaptés à la forme de l'insert (9) de telle sorte que l'insert (9) peut être introduit dans les évidements (27) en direction axiale (A) du moyeu (3).

5. Volant de véhicule selon la revendication 4, **caractérisé en ce que** le revêtement en mousse (19) a une saillie (28) qui forme une liaison par enclenchement avec l'insert (9) introduit dans l'évidemment (27) dans le revêtement en mousse (19).

6. Volant de véhicule selon l'une des revendications précédentes, **caractérisé en ce que** les deuxièmes tronçons de segments (13) ont un profil de section transversale oblongue en direction axiale, avec une face extérieure sensiblement cylindrique et une face intérieure sensiblement cylindrique.

7. Volant de véhicule selon l'une des revendications précédentes, **caractérisé en ce qu'**au moins la couronne de volant est habillée de cuir et grâce à l'habillage en cuir, les deuxièmes tronçons de segments (13) de la couronne de volant (5) ne sont pas visibles de l'extérieur.

8. Volant de véhicule selon l'une des revendications précédentes, **caractérisé en ce que** les deuxièmes tronçons de segments (13) sont prévus dans la région de transition entre les rayons (7) et la couronne de volant (5).
